# EUROPEAN PATENT SPECIFICATION

(11) **EP 2 287 048 B1**
(45) Date of publication and mention of the grant of the patent: **09.01.2013**
(21) Application number: 09168425.8
(22) Date of filing: 21.08.2009
(51) Int. Cl.: B60R 21/36

(54) **A pedestrian-protecting air-bag arrangement**
Fußgängerschützende Airbageinheit
Agencement de coussin gonflable pour piétons

(43) Date of publication of application: 23.02.2011
(73) Proprietor: AUTOLIV DEVELOPMENT AB, 447 83 Vargarda (SE)
(72) Inventor: Johansson, John Anders, 44731 Vargarda (SE); Dahlgren, Mikael, 44156 Alingsas (SE); Ostling, Martin, 50733 Bramhult (SE)
(74) Representative: Beattie, Alex Thomas Stewart

(56) References cited:
- EP-A2- 1 318 054
- WO-A1-2009/070059
- GB-A- 2 397 559
- US-A1- 2007 023 223
- US-A1- 2007 114 090

## Description

### Description of Invention

THIS INVENTION relates to an air-bag arrangement for a motor vehicle, for protecting a pedestrian in the event that the motor vehicle collides with the pedestrian.

Pedestrian-protecting air-bag arrangements for motor vehicles are known. Typically, when a system of this type is activated, an air-bag inflates from a region in the vicinity of the rear end of the vehicle's bonnet, at least partially covering the vehicle windscreen and parts of the vehicle's A-pillars. The air-bag provides a cushion which minimises the likelihood of the head and/or torso of pedestrian striking the windscreen or A-pillars of the vehicle, reducing the likelihood of injury to the pedestrian.

Generally, the vehicle's bonnet will be able to pivot around a forward end thereof as the airbag is deployed, thus lifting the rear end of the bonnet to accommodate the expansion of the air-bag. This also has the beneficial effect of lifting the bonnet away from the vehicle's engine block, allowing the bonnet to deform upon impact with the pedestrian, thus decelerating the pedestrian's downward movement relatively gently, again reducing the risk of injury.

One problem with air-bag arrangements of this type is that the volume of the air-bag is relatively large, as the air-bag is required to cover a sizeable area of the vehicle's windscreen and A-pillars. Full inflation of the air-bag therefore takes a relatively long time, and the bonnet of the vehicle may be lifted only at a slow rate as the air-bag is inflated. This may hinder or prevent full and effective deployment of the air-bag, and may even lead to the air-bag becoming stuck beneath the vehicle's bonnet.

One example of a system to overcome this problem is disclosed in WO2009070059. This document discloses a pedestrian-protection air-bag which is initially rolled around an axis which is substantially perpendicular to the direction of deployment of the air-bag, so that a central region is defined, immediately surrounding the gas inlet, as well as left and right rolled side regions. The side regions are then folded so as to lie directly under the central region, between the central region and an internal wall of a housing in which the air-bag is initially packed.

When the air-bag is inflated, pressurised gas is introduced directly into the central region of the air-bag, which begins to inflate. During this initial inflation stage, the side regions of the air-bag are trapped in their rolled-up and folded state between the inflating central region and the wall of the housing, and are therefore not able to inflate. As a result, the region of the air-bag which is able to inflate is relatively small, and hence this region inflates quickly raising the rear end of the bonnet rapidly. Once the bonnet has been raised, the side regions become free to unroll and inflate during a second phase of deployment of the air-bag.

It is an object of the present invention to seek to provide an improved air-bag arrangement of this type.

Accordingly, one aspect of the present invention provides a pedestrian protection air-bag arrangement for use in a motor vehicle, the arrangement comprising: an air-bag comprising a main body that is rolled around an axis that is substantially perpendicular to the direction of deployment of the air-bag, and a central portion comprising a throat with an inflation inlet to receive pressurised gas to inflate the air-bag, the air-bag further comprising first and second side portions that are in fluid communication with the central portion, are rolled and are spaced apart from, and do not overlie, the central portion; and an elongate housing having first and second ends, the air-bag being contained in the housing so that the side portions are located at or near the respective ends, and a lid for sealing the housing prior to activation of the air-bag.

Advantageously, the rolled portions of the first and second side portions are separated from the throat by stretches of the rolled main body.

Preferably, ends of the rolled main body are each coiled, each coil forming part of a respective one of the side portions.

Conveniently, the ends of the rolled main body are each coiled about a respective axis that is substantially perpendicular to the direction of deployment of the air-bag and also substantially perpendicular to the axis about which the main body is rolled.

Advantageously, the housing has a central region and first and second end regions, the housing being narrowed between the central regions and each of the end regions, and wherein the first and second side portions are received in respective ones of the end regions of the housing.

Preferably, the central portion comprises an inflatable throat into which pressurised gas is introduced when the air-bag is inflated, the inflatable throat being arranged between a bottom surface of the housing and the central portion so that, when pressurised gas is introduced into the throat the throat inflates, lifting the central portion away from the bottom surface of the housing.

Conveniently, one or more strips are provided within the air-bag, attached to upper and lower surfaces thereof to limit the separation of the upper and lower surfaces from one another during inflation of the air-bag.

Advantageously, one or more apertures are formed through the or each strip to allow gas to pass through the strip.

Preferably, the lid has a line of weakness formed therein so that, when the air-bag is inflated, the lid ruptures along the line of weakness so that a portion of the lid hinges upwardly from the remainder of the housing so as to deflect the inflating air-bag laterally during deployment thereof.

Another aspect of the present invention provides a motor vehicle incorporating an arrangement according to any preceding claim.

In order that the present invention may be more readily understood embodiments thereof will now be described by way of example, with reference to the accompanying drawings, in which:
figures 1 to 5 show stages in folding and packing an air-bag;
figure 6 shows a lid of a housing for the air-bag of figure 1;
figure 7 shows a throat for use with an alternative air-bag; and
figure 8 shows an inflated air-bag.

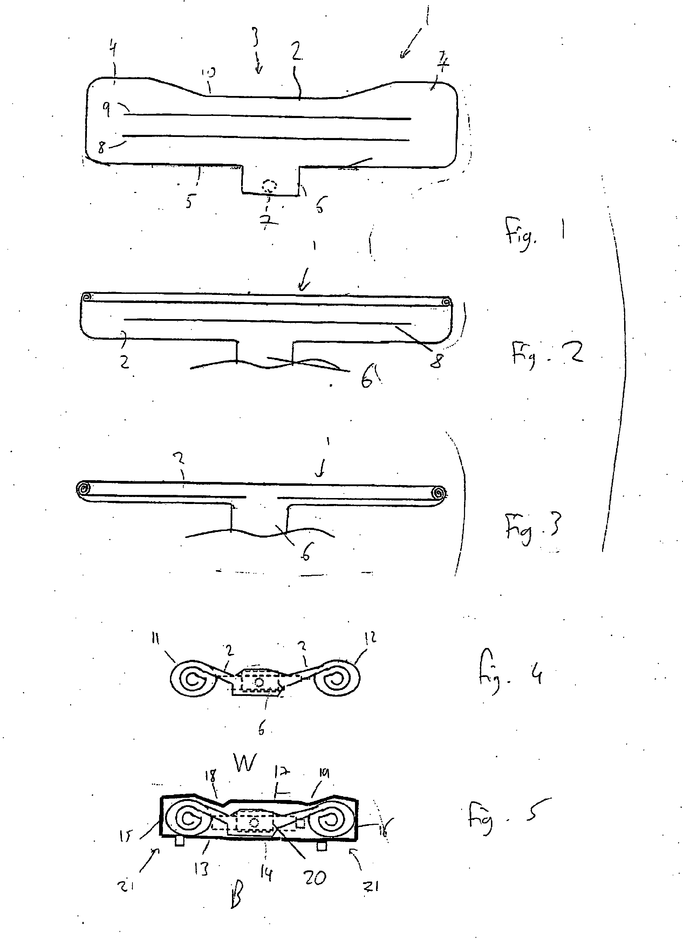

Referring firstly to figure 1, a pedestrian protection air-bag 1 embodying the present invention is shown. The air-bag 1 is shown in its uninflated state, prior to being packaged into a housing.

The air-bag 1 has a main body 2. The main body 2 preferably has a generally straight rear edge 5, is of a substantially constant width over a middle region 3 thereof, and has left and right side regions 4 which are wider than the middle region 3. When the air-bag 1 is inflated and deployed, the middle region 3 will cover at least a part of the windscreen of the vehicle, whereas the left and right regions 4 will cover at least parts of the A-pillars to either side of the windscreen.

In an embodiment the main body 2 is formed from upper and lower layers of fabric of identical or similar shape. The upper layer overlies the lower layer, and the layers are sealed to one another at their edges or are otherwise joined, for instance by sewing, as is known in the art. The main body 2 therefore defines a substantially enclosed inflatable chamber.

At approximately a central point of the rear edge 5 of the main body 2, a throat 6 protrudes. The throat 6 has an inlet aperture 7 through which pressurised gas may be introduced into the interior of the air-bag 1 to inflate the air-bag 1. In an embodiment, the throat 6 is formed from overlying extensions of the upper and lower layers of fabric, with the inlet aperture 7 being formed in the lower layer of fabric.

First and second transverse connecting strips 8,9 may be provided within the main body 2 of the air-bag 1, and these will be described in greater detail below.

In order to package the air-bag 1, in an embodiment the main body 2 is first rolled from its forward edge 10 thereof towards the rear edge 5, about an axis that is substantially perpendicular with the direction of deployment of the air-bag 1, as shown in figure 2. When this rolling procedure is complete, the air-bag 1 will be as shown in figure 3, resembling an elongate, approximately cylindrical roll with a protruding throat 6. The parts of the roll that extend left and right from the throat 6 are then each rolled for a second time, about an axis which is substantially perpendicular to the longitudinal axis of the roll, and also substantially perpendicular to the plane of the throat 6. This procedure forms left and right coils 11,12, which are separated from the throat 6 by stretches of the main rolled body 2, as shown in figure 4, and lie in a plane that is generally parallel with the plane of the throat 6.

The air-bag 1 is now ready to be packaged in a housing 13, as shown in figure 5. In the embodiment shown in figure 5, the housing 13 takes the form of an elongate container having a bottom surface and upstanding walls. A rear wall 14 and left and right side walls 15,16 are substantially straight, but the forward wall 17 has left and right indented portions 18,19, at which the width of the housing 13 is narrowed. The indented portions 18,19 are located between (preferably approximately midway between) a central point of the front wall 17 and the points at which the front wall 17 meets the left and right side walls 15,16.

It will be understood that the folded air-bag 1 generally defines a central portion 20, which includes the throat 6 and parts of the main body 2 immediately adjacent the throat 6, but not including the coils 11,12, and two side portions 21, comprising the coils 11,12. The air-bag 1 is fitted into the housing 13 so that the central portion 20 is received within a central region of the housing 13 that is defined between the indented portions 18,19 of the front wall 17, with the side portions 21 being received at or near the ends of the housing 13, in the regions between the indented portions, 18,19 and the respective side walls 15,16.

It will be appreciated that, since the coils 11,12 lie in a plane that is generally parallel with the plane of the throat 6, the formation of the coils 11,12 will not increase the depth of the uninflated air-bag, and so the housing 13 may have a relatively low profile.

An aperture (not shown) is provided in the lower surface of the housing 13, and the throat 6 is attached to the housing 13 so that the aperture aligns with the gas inlet 7, allowing pressurised gas from an external source such as an inflator (not shown) to be introduced into the interior of the air-bag 1 through the aperture in the lower wall of the housing 13. In an embodiment a deflector (not shown) is provided to assist in directing pressurised gas appropriately into the interior of the air-bag 1.

Figure 5 shows a generally top-down view of the air-bag 1 packaged into the housing 13. When installed in a motor vehicle, the windscreen of the vehicle (indicated at W) would be located adjacent the front wall 17 of the housing 13, with the rear edge of the bonnet (indicated at B) provided adjacent, above or near the rear wall 14 of the housing 13.

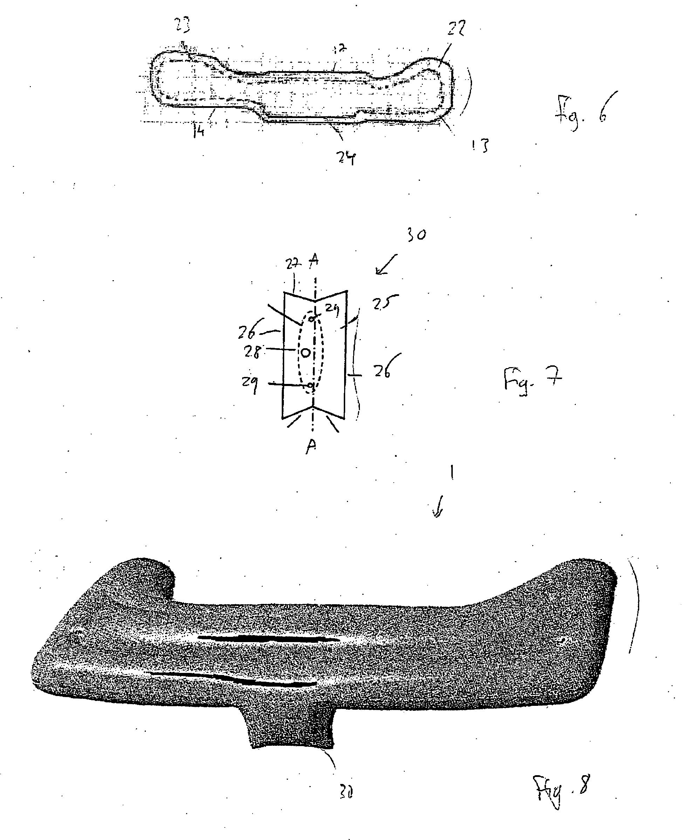

Once the air-bag 1 has been packed into the housing 13, a lid 22 is placed over the top of the housing 13 so that the air-bag 1 is substantially enclosed within the housing 13, as shown in figure 6. To allow the air-bag 1 to break out of the housing 13 during activation, in an embodiment a weakened split line 23 is defined around substantially the entirety of the periphery of the lid 22, with the exception of a section near the rear wall 14, where a hinge 24 (for instance, a living hinge) is provided. The split line 23 is a weakened portion where the lid 22 may break, and may be formed by perforations, a line of reduced thickness in the material of the lid 22, or in any other suitable way.

In use, the air-bag module, comprising the air-bag 1 packed into the housing 13, is installed in a motor vehicle at a location near the front edge of the vehicle's front windscreen. All of the module may be located beneath the rear part of the vehicle's bonnet, or some or all of the module may be located beneath the cowl of the vehicle. Indeed, the module may be provided so that the lid 22 of the housing 13 forms a part of the cowl, and is provided integrally therewith, to eliminate the need to provide a lid 22 for the housing 13 and a separate cowl.

In preferred embodiments, the indented portions 18,19 of the front wall 17 of the housing 13 are formed so that the motors that drive respective left and right windscreen wipers of the vehicle may be accommodated at least partially within the spaces formed by the indented portions 17,18.

The lid 22 of the housing 13 may be provided so as to be substantially horizontal, substantially parallel with the rear of the bonnet, substantially parallel with the lower edge of the windscreen, or at any other suitable angle.

Deployment of the air-bag 1 will now be described.

When the air-bag 1 is triggered, pressurised gas will be introduced into the interior of the air-bag 1 through the inlet 7 in the throat 6. Pressurised gas will therefore be delivered, in the first instance, into the interior of the central portion 20 of the air-bag 1.

This will cause the central portion 20 of the air-bag 1 to inflate rapidly. However, the side portions 21 of the air-bag 1 will be substantially prevented from inflating, since the side portions 21 are rolled into coils 11,12 as discussed above, which are packed into the end portions of the housing 13. Delivery of gas into the side portions 21 would further be hampered by the narrowed regions of the housing 13 between the central portion 20 and the side portions 21, formed by the indented regions 18,19 in the front wall 17 of the housing 13.

Since the portion of the air-bag 1 into which pressurised gas may be delivered in the first instance is relatively small, the central portion 20 of the air-bag 1 will rapidly reach substantially full inflation. As this occurs, the split line 23 formed in the lid 22 of the housing 13 will rupture, providing an opening in the top surface of the housing 13 through which the inflating air-bag 1 may escape from the housing 13. The hinge 24 will not rupture during this process, however, and hence the part of the lid 22 that is circumscribed by the split line 23 and hinge 24 will pivot upwardly around the hinge 24, and will deflect the air-bag 1 towards the windscreen of the vehicle.

As the central portion 20 of the air-bag 1 rapidly inflates to substantially full inflation, the rear part of the vehicle's bonnet will be lifted up, so the bonnet pivots forwardly and upwardly about the front edge of the bonnet. As this occurs, the air-bag 1 will rise upwardly out of the housing 13, as it presses against the underside of the rear part of the bonnet, thus lifting the side portions 21 out of the housing 13. The side portions 21 will now be able to inflate rapidly, and the side portions 21 will uncoil, unroll and inflate to cover the side portions of the windscreen and the A-pillars of the vehicle, as described above.

It will therefore be understood that, during an initial phase of inflation of the air-bag 1, the central portion 20 will rapidly inflate to substantially full inflation, whilst the side portions 21 remain substantially uninflated. This will allow the central region 20 to lift the rear part of the bonnet rapidly. Following the lifting of the rear part of the bonnet, a second stage of inflation will occur, in which the side portions 21 of the air-bag 1 inflate to substantially full inflation.

As discussed above, first and second transverse strips 8,9 may be provided within the main body 2 of the air-bag 1. Each of the strips, 8,9 preferably takes a generally elongate rectangular form, and is connected to both the upper and lower layers of the air-bag 1. The strips 8,9 are provided at spaced intervals between the rear and front edges 5,10 of the air-bag 1.

The strips 8,9 help to maintain the shape of the air-bag 1, forcing the air-bag 1 when fully inflated to adopt a generally flat configuration, resembling an inflatable mattress, rather than forming a rounded sausage-like shape.

The strips, 8,9 also impede the flow of pressurised gas from the inlet 7, which is provided near the rear edge 5 of the air-bag 1, towards the front edge 10 of the air-bag 1. This also helps to ensure that the region of the air-bag 1 that is inflated during the first phase of inflation is of relatively small volume, helping to lift the rear part of the bonnet rapidly.

In preferred embodiments, one or more apertures are formed in each of the strips 8,9, to allow gas to flow through the strips 8.9. These apertures allow a relatively small amount of gas to pass through the strips 8,9, thus reducing the risk of failure of the fabric and/or seams of the air-bag 1 as the highly pressurised gas is introduced into the air-bag 1.

In further embodiments of the invention, the throat of the air-bag 1 may be formed so as to have a three-dimensional shape, helping to lift the central portion 20 of the air-bag 1 upwardly during the initial phase of inflation, thus further assisting in lifting the rear portion of the vehicle bonnet. Figure 7 shows a single sheet 25 of fabric, which is substantially rectangular in shape, having long sides 26 and short sides 27. A relatively large central aperture 28 is provided for the nozzle of an inflator (not shown) to introduce gas into the throat, and smaller apertures 29 are provided to the sides of the large aperture 28 to allow a deflector arrangement (not shown) to be attached to the throat. The sheet 25 of fabric is folded transversely about a line A-A which is parallel with the long sides 26 of the sheet 25, and substantially bisects the sheet 25. It will be understood that each of the short sides 27 is folded in half, with the halves lying near one another, and these halves are sewn together. The long edges 26 of the sheet 25 are then sewn or otherwise attached to the edges of an aperture formed in one of the layers of the air-bag 1.

Prior to deployment of the air-bag 1 the throat is folded and lies flat, thereby adding little or no height to the folded air-bag. As pressurised gas is introduced into the throat, however, the throat will inflate, adopting a three-dimensional shape and assisting in lifting the main body 2 of the air-bag 1 upwardly.

An inflated air-bag 1 incorporating a 3-dimensional throat 30 of this type is shown in figure 8.

It will be appreciated that arrangements embodying the present invention will be advantageous, as they will allow rapid lifting of the rear part of a bonnet of a vehicle, thus ensuring swift and reliable deployment of the air-bag in the event of an actual or likely collision with a pedestrian.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A pedestrian protection air-bag arrangement for use in a motor vehicle, the arrangement comprising:
an air-bag (1) comprising a main body (2) that is rolled around an axis that is substantially perpendicular to the direction of deployment of the air-bag (1), and a central portion (20) comprising a throat (6) with an inflation inlet (7) to receive pressurised gas to inflate the air-bag (1), the air-bag further comprising first and second side portions (21) that are in fluid communication with the central portion (20), are rolled and are spaced apart from, and do not overlie, the central portion (20); and
an elongate housing (13) having first and second ends, the air-bag being contained in the housing so that the side portions (21) are located at or near the respective ends, and a lid (22) for sealing the housing (13) prior to activation of the air-bag (1).

2. An arrangement according to claim 1, wherein the rolled portions of the first and second side portions (21) are separated from the throat (6) by stretches of the rolled main body (2).

3. An arrangement according to claim 2, wherein ends of the rolled main body (2) are each coiled, each coil (11, 12) forming part of a respective one of the side portions (21).

4. An arrangement according to claim 3, wherein the ends of the rolled main body (2) are each coiled about a respective axis that is substantially perpendicular to the direction of deployment of the air-bag (1) and also substantially perpendicular to the axis about which the main body (2) is rolled.

5. An arrangement according to any preceding claim wherein the housing (13) has a central region and first and second end regions, the housing (13) being narrowed between the central regions and each of the end regions, and wherein the first and second side portions (21) are received in respective ones of the end regions of the housing (13).

6. An arrangement according to any preceding claim wherein the central portion (20) comprises an inflatable throat (6) into which pressurised gas is introduced when the air-bag (1) is inflated, the inflatable throat (6) being arranged between a bottom surface of the housing and the central portion (20) so that, when pressurised gas is introduced into the throat (6) the throat (6) inflates, lifting the central portion (20) away from the bottom surface of the housing (13).

7. An arrangement according to any preceding claim wherein one or more strips (8, 9) are provided within the air-bag (1), attached to upper and lower surfaces thereof to limit the separation of the upper and lower surfaces from one another during inflation of the air-bag (1).

8. An arrangement according to claim 7, wherein one or more apertures are formed through the or each strip (8, 9) to allow gas to pass through the strip (8, 9).

9. An arrangement according to any preceding claim wherein the lid (22) has a line of weakness (23) formed therein so that, when the air-bag (1) is inflated, the lid (22) ruptures along the line of weakness (23) so that a portion of the lid (22) hinges upwardly from the remainder of the housing (13) so as to deflect the inflating air-bag (1) laterally during deployment thereof.

10. A motor vehicle incorporating an arrangement according to any preceding claim.

## Patentansprüche

1. Fußgängerschützende Airbaganordnung zur Verwendung in einem Kraftfahrzeug, wobei die Anordnung umfasst:
einen Airbag (1) mit einem Hauptkörper (2), der um eine Achse herum aufgerollt ist, die im Wesentlichen senkrecht zur Entfaltungsrichtung des Airbags (1) ist, und einem mittleren Abschnitt (20), der ein Halsstück (6) mit einem Aufblaseinlass (7) umfasst, um unter Druck gesetztes Gas zum Aufblasen des Airbags (1) aufzunehmen, wobei der Airbag ferner einen ersten und zweiten Seitenabschnitt (21) umfasst, die mit dem mittleren Abschnitt (20) in Fluidverbindung stehen, aufgerollt und vom mittleren Abschnitt (20) beabstandet sind und diesen nicht überlagern; und
ein längliches Gehäuse (13) mit einem ersten und zweiten Ende, wobei der Airbag in dem Gehäuse enthalten ist, so dass sich die Seitenabschnitte (21) an oder nahe den jeweiligen Enden befinden, und einer Abdeckung (22) zum Abdichten des Gehäuses (13) vor der Aktivierung des Airbags (1).

2. Anordnung nach Anspruch 1, wobei die aufgerollten Abschnitte des ersten und zweiten Seitenabschnitts (21) von dem Halsstück (6) durch Ausdehnungen des aufgerollten Hauptkörpers (2) getrennt sind.

3. Anordnung nach Anspruch 2, wobei Enden des aufgerollten Hauptkörpers (2) jeweils zusammengerollt sind, wobei jede Rolle (11, 12) Teil eines jeweiligen der Seitenabschnitte (21) ist.

4. Anordnung nach Anspruch 3, wobei die Enden des aufgerollten Hauptkörpers (2) jeweils um eine betreffende Achse zusammengerollt sind, die im Wesentlichen senkrecht zur Entfaltungsrichtung des Airbags (1) und auch im Wesentlichen senkrecht zu der Achse ist, um welche der Hauptkörper (2) aufgerollt ist.

5. Anordnung nach irgendeinem vorhergehenden Anspruch, wobei das Gehäuse (13) einen mittleren Bereich und einen ersten und zweiten Endbereich aufweist, wobei das Gehäuse (13) zwischen den mittleren Bereichen und jedem der Endbereiche verschmälert ist und wobei der erste und zweite Seitenabschnitt (21) in jeweiligen der Endbereiche des Gehäuses (13) aufgenommen sind.

6. Anordnung nach irgendeinem vorhergehenden Anspruch, wobei das Halsstück (6) ein aufblasbares Halsstück (6) ist, in welches unter Druck gesetztes Gas eingeleitet wird, wenn der Airbag (1) aufgeblasen wird, wobei das aufblasbare Halsstück (6) zwischen einer Bodenfläche des Gehäuses und dem mittleren Abschnitt (20) so angeordnet ist, dass, wenn unter Druck gesetztes Gas in das Halsstück (6) eingeleitet wird, das Halsstück (6) aufgeblasen wird, wobei es den mittleren Abschnitt (20) von der Bodenfläche des Gehäuses (13) weg hochhebt.

7. Anordnung nach irgendeinem vorhergehenden Anspruch, wobei ein oder mehrere Streifen (8, 9) im Airbag (1) vorgesehen sind, wobei sie an dessen Ober- und Unterseite angebracht sind, um die Trennung der Ober- und Unterseite voneinander während des Aufblasens des Airbags (1) zu begrenzen.

8. Anordnung nach Anspruch 7, wobei eine oder mehrere Öffnungen durch den oder jeden Streifen (8, 9) ausgebildet sind, um Gas durch den Streifen (8, 9) hindurchströmen zu lassen.

9. Anordnung nach irgendeinem vorhergehenden Anspruch, wobei die Abdeckung (22) eine in ihr ausgebildete Sollbruchlinie (23) aufweist, so dass, wenn der Airbag (1) aufgeblasen wird, die Abdeckung (22) längs der Sollbruchlinie (23) aufreißt, so dass ein Abschnitt der Abdeckung (22) von dem übrigen Gehäuse (13) nach oben klappt, um den sich aufblasenden Airbag (1) während seiner Entfaltung seitlich abzulenken.

10. Kraftfahrzeug mit einer Anordnung nach irgendeinem vorhergehenden Anspruch.

## Revendications

1. Dispositif de coussin d'air pour la protection des piétons, à utiliser dans un véhicule à moteur, le dispositif comprenant :
un coussin d'air (1) comprenant un corps principal (2) enroulé autour d'un axe sensiblement perpendiculaire à la direction du déploiement du coussin d'air (1), et une partie centrale (20) comprenant une gorge (6) avec une ouverture de gonflage (7) pour recevoir du gaz sous pression pour gonfler le coussin d'air (1), le coussin d'air comprenant en outre une première et une deuxième parties (21) qui sont en communication fluide avec la partie centrale (20), sont enroulées et espacées de la partie centrale (20) sans recouvrir celle-ci; et
un logement allongé (13) doté d'une première et une deuxième extrémités, le coussin d'air étant contenu dans le logement de manière à ce que les parties latérales (21) soient situées aux extrémités respectives ou près de celles-ci, et un couvercle (22) pour fermer hermétiquement le logement (13) avant l'activation du coussin d'air (1).

2. Dispositif conforme à la revendication 1, où les parties enroulées des première et deuxième parties latérales (21) sont séparées de la gorge (6) par des étendues du corps principal enroulé (2).

3. Dispositif conforme à la revendication 2, où des extrémités du corps principal enroulé (2) sont chacune spiralée, chaque spirale (11, 12) constituant une partie d'une respective des parties latérales (21).

4. Dispositif conforme à la revendication 3, où les extrémités du corps principal enroulé (2) sont chacune spiralée autour d'un axe respectif qui est sensiblement perpendiculaire à la direction de déploiement du coussin d'air (1) et qui est aussi sensiblement perpendiculaire à l'axe autour duquel le corps principal (2) est enroulé.

5. Dispositif conforme à une quelconque des revendications précédentes, où le logement (13) est doté d'une région centrale et d'une première et une deuxième région d'extrémité, le logement (13) étant plus étroit entre les régions centrales et chacune des régions d'extrémité, et où la première et la deuxième partie latérale (21) sont reçues dans les unes respectives des régions d'extrémité du logement (13).

6. Dispositif conforme à une quelconque des revendications précédentes, où la gorge (6) est une gorge gonflable (6) dans laquelle s'introduit du gaz sous pression quand le coussin d'air (1) se gonfle, la gorge gonflable (6) étant disposée entre une surface inférieure du logement et la partie centrale (20) de manière à ce que, quand du gaz sous pression s'introduit dans la gorge (6), la gorge (6) se gonfle, soulevant la partie centrale (20) et l'éloignant de la surface inférieure du logement (13).

7. Dispositif conforme à une quelconque des revendications précédentes, où une ou plusieurs bandes (8, 9) sont prévues à l'intérieur du coussin d'air (1), attachées aux surfaces inférieure et supérieure de celui-ci, pour limiter la séparation des surfaces inférieure et supérieure l'une de l'autre au cours du gonflage du coussin d'air (1).

8. Dispositif conforme à la revendication 7, où une ou plusieurs ouvertures sont formées à travers la ou chaque bande (8, 9) pour permettre au gaz de passer à travers les bandes (8, 9).

9. Dispositif conforme à une quelconque des revendications précédentes, où le couvercle (22) est doté d'une ligne de moindre résistance (23) formée dans celui-ci, de manière à ce que, quand le coussin d'air (1) se gonfle, le couvercle (22) se brise le long de la ligne de moindre résistance (23) de sorte qu'une partie du couvercle (22) bascule vers le haut en s'éloignant du reste du logement (13) pour faire dévier latéralement le coussin d'air (1) en cours de gonflage au cours du déploiement de celui-ci.

10. Véhicule à moteur comprenant un dispositif conforme à une quelconque des revendications précédentes.
